# EUROPEAN PATENT APPLICATION

(11) **EP 4 664 328 A1**
(43) Date of publication of application: **17.12.2025**
(21) Application number: 25181160.0
(22) Date of filing: 05.06.2025
(51) Int. Cl.: G06F 21/10, G06F 21/12, G06F 21/44, G06F 21/57, G06F 21/62, G06F 21/71, G06F 21/76, G06F 21/85, H04L 9/32

(54) **SYSTEM AND METHOD OF SHARING RESOURCES ON A SYSTEM ON CHIP IN A SECURE MANNER**

(30) Priority: 14.06.2024 IN 202441045969
(71) Applicant: NXP USA, Inc., Austin, TX 78735 (US)
(72) Inventor: Kumar, Surender, 5656AG Eindhoven (NL); Singh, Pradip, 5656AG Eindhoven (NL)
(74) Representative: Miles, John Richard

(57) **Abstract**

A system and method for protecting access to resources of an SoC among multiple owners. The SoC includes multiple master devices, each configured to conduct transactions with addressed ones of multiple slave devices via an interconnect, multiple access devices coupled to the interconnect and programmed to control access to each slave device, a secure memory that stores a hash value of a partitioning contract incorporating a list of resources available to each of the owners, and a security engine. The security engine is configured to allow installation and execution of code provided by each of the owners only when the code is authenticated by the stored partitioning contract hash value. The security engine is also configured to program the access devices according to the partitioning contract. An encrypted cohort owner tag may be stored for each owner and used to generate cohort authentication tags used to authenticate cohort definitions.

## Description

### Field

The present disclosure relates in general to resource sharing, and more particularly to a system and method of sharing resources of a system-on-chip in a secure manner.

### Description of the Related Art

Many applications, such as automotive applications or industrial applications or the like, incorporate a variety of complex functions that must be managed in a coherent manner. For example, an automotive application may include multiple electronic control units (ECUs) for controlling different functions, such as a first ECU functioning as an engine control module, another ECU for performing braking functions, another ECU for performing lighting functions, another ECU for performing radar vision functions, and so on. In many conventional configurations, one or more ECUs developed and controlled by an individual provider were incorporated on a separate system-on-chip (SoC) owned and controlled by that individual provider. Such separation was based on the general presumption of mistrust among the multiple providers that are often competitors with each other. Such configurations required complex interfaces between multiple SoC semiconductor chips that consumed space and reduced efficiency.

As applications are becoming even more complex, there is a trend in various industries to combine resources on a single SoC in which the resources are distributed among and controlled by multiple providers. Resources generally refer to initiator or master devices (e.g., cores, bus masters, engines, controllers, etc.) and slave devices (e.g., peripherals, memory, input/output devices, registers, timers, etc.) that are collectively used to conduct transactions for performing operations in accordance with software provided by each "owner" or provider. Isolation of resources is an essential component to the needs of safety, security, and robustness of software. As functions that were previously on separate devices, often developed by different vendors, are integrated onto one device, the complexity of having one entity manage the isolation for all components becomes complex and would require interaction between often competing developers to put a single unified scheme in place.

### Brief Description Of The Drawings

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a system-on-chip (SoC) implemented according to one embodiment
FIG. 2 is a simplified block diagram of a partitioning contract (PaCo) configured according to one embodiment.
FIG. 3 is a simplified block diagram of the cohort definitions CD1 - CDN according to one embodiment.
FIG. 4 is a simplified block diagram illustrating generation of a cohort authentication tag (CATX) used for authenticating a corresponding cohort definition CDX of an owner OIDY according to one embodiment.
FIG. 5 is a flowchart diagram illustrating generation and installation of the PaCo and PCH of FIG. 2 into the SoC of FIG. 1 according to one embodiment.
FIG. 6 is a flowchart diagram illustrating installation of a cohort definition CDX into the SoC of FIG. 1 according to one embodiment.
FIG. 7 is a flowchart diagram illustrating operation of the security engine of FIG. 1 upon startup and verification of the SoC of FIG. 1 according to one embodiment.

### Detailed Description

The present disclosure described a scheme for protecting access to resources of a System-on-Chip (SoC) among multiple owners. The SoC includes multiple master devices, each configured to conduct transactions with addressed ones of multiple slave devices via an interconnect, multiple access devices coupled to the interconnect and programmed to control access to each slave device, a secure memory that stores a hash value of a partitioning contract incorporating a list of resources available to each of the owners, and a security engine. The security engine is configured to allow installation and execution of code provided by each of the owners only when the code is authenticated by the stored partitioning contract hash value. The security engine is also configured to program the access devices according to the partitioning contract.

The partitioning contract is agreed upon by the owners. The hash value of the partitioning contract is generated and stored in the secure memory and used to authenticate code for installation and execution. Each owner is associated with a cohort owner tag including a unique owner identifier and a randomly determined owner key that is encrypted and securely stored by the security engine. Each owner provides at least one cohort definition including a list of resources, at least one boot image, and a cohort identifier, and each owner also provides an owner cohort authentication tag with each cohort definition that is calculated over a provided cohort owner tag, the cohort definition, and the partitioning contract previously provided to the owner for installation. For each cohort definition, the security engine is configured to calculate a cohort authentication tag using a stored cohort owner tag for the owner, the provided cohort definition, and a locally stored copy of the partitioning contract, and to compare the calculated cohort authentication tag with the provided owner cohort authentication tag for authenticating the provided cohort definition for installation. The security engine may be configured to calculate a cohort hash for an authenticated cohort definition and to install the authenticated cohort definition and the calculated cohort hash.

The security engine may be configured to recalculate a hash of a locally stored copy of the partitioning contract and to compare the recalculated hash with the stored partitioning contract hash value upon bootup. The security engine may further be configured to recalculate a cohort hash on each stored cohort definition and to compare each recalculated cohort hash with a corresponding stored cohort hash value upon bootup. The security engine may further be configured to retrieve a partitioning contract hash from each stored cohort definition and to compare each retrieved partitioning contract hash with the stored partitioning contract hash value upon bootup.

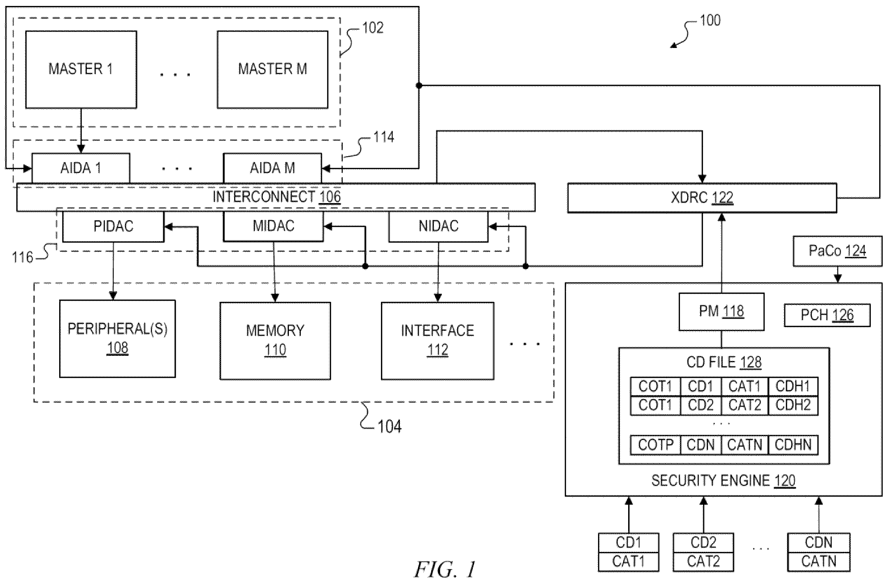

FIG. 1 is a simplified block diagram of a system-on-chip (SoC) 100 implemented according to one embodiment. The SoC 100 includes multiple (e.g., "M") masters 102 (individually shown as MASTER 1, ..., MASTER M), communicatively coupled to a set of slave devices 104 via an interconnect 106. A master device as used herein refers to devices that initiate transactions with one or more of the slave devices 104 via the interconnect 106. The interconnect 106 may be configured in any suitable manner, such as a communication bus or set of switches or other such electronic communication interface. The masters 102 may include, for example, processors, processing devices, central processing units (CPUs), cores, accelerators, controllers, engines, or other processing structures that execute software, firmware, or other code loaded onto the SoC 100 for performing the various functions. Examples of masters 102 may also include direct memory access (DMA) engines and Ethernet engines or the like. The slave devices 104 may include, for example, one or more peripheral(s) 108, memory 110, interface devices 112, etc. The memory 110 may include one or more of different memory forms, such as different types of random-access memory (RAM) or read-only memory (ROM) which may be subdivided in any suitable manner. An example of an interface device is a peripheral component interconnect express (PCIe) controller, although different types of interface devices are also contemplated. Some devices, such as DMA controllers and Ethernet controllers or the like, may have hybrid master/slave functionality (e.g., DMA engine as master for accessing and controlling DMA channels as slaves).

Each master 102 interfaces the interconnect 106 via a corresponding one of set of M access identifier assignment (AIDA) devices 114 (individually shown as AIDA 1, ..., AIDA M). Each bus or interconnect transaction initiated by a master 102 is identified by an Access Identifier (AID), which is a concatenation of a cohort identifier (CID) and a Domain Identifier (DID). The term "cohort" as used herein is intended to refer to a group containing a list of resources, boot images or code, and associated identifiers, in which the code provided by an owner uses or manages the listed resources for performing operations and functions to be performed by the SoC 100. Each AID is produced by the corresponding AIDA device 114 for a corresponding master 102 attempting a transaction via the interconnect 106 to a slave device 104 by a corresponding one of a set of identification (ID) access control (IDAC) devices 116. The IDAC devices include a peripheral IDAC (PIDAC) for controlling access to any one of the peripheral(s) 108, a memory IDAC (MIDAC) for controlling access to the memory 110, and an interface IDAC (NIDAC) for controlling access to each of one or more communication devices 112. Each access is a read or write transaction to a corresponding slave device or to a corresponding address or address range of the memory 110.

An Owner CID (OCID) defines what master 102 "owns" which of the resources, i.e. memory range(s), peripheral devices, interface devices, etc. Access rules define what CID and DID can read and/or write those resources. The OCID values in the MIDAC / PIDAC / NIDAC, as well as the CID values produced by the AIDAs 114, can be configured by a partition manager (PM) 118 having its AID equal to 0.1, in which the PM 118 may be contained within a security engine 120. The access rules are configured by any master having an AID equal to X.1 where X is the CID matching with the OCID in that rule entry. Such master (AID == X.1) is referred to as the cohort manager for cohort X. The PM 118 programs each of the AIDA devices 114 and each of the IDAC devices 116 via an extended domain resource controller (XDRC) 122 according to a locally stored partitioning contract (PaCo) 124.

The PaCo 124 and a corresponding a PaCo hash (PCH) 126 are stored within or otherwise accessible to the security engine 120. The PaCo 124, which is a list of resources for use by each owner that is negotiated by and agreed the owners of the SoC 100, is stored in the SoC 100 and made available to the security engine 124. The PCH 126 of the PaCo 124 is calculated and provisioned within the security engine 120 as a secure asset. In one embodiment, for example, the PaCo 124 is securely stored in a read-only memory located within or otherwise accessible to the security engine 120 that is not exposed to any other processing entity outside the security engine 120. Each owner includes a corresponding PCH of the pre-agreed partitioning contract while installing their images in security engine 120 as further described herein, in which the PCH provided by each owner must match the PCH 126 previously provisioned. The images are installed only when there is a PCH match. The security engine 120 is configured to compare each owner image PCH with the preinstalled PCH 126. If there is mismatch between the PCH provided by the owner and the PCH 126, then the security engine 120 will not install the owner image. In this manner, the resource sharing agreement among the owners is enforced so that the resources of the SoC 100 are allocated to the owners in a trusted manner.

A set of cohort definitions (individually labeled CD1, CD2, ... CDN) are stored in a CD file 128 within or otherwise accessible to the security engine 120. Each cohort definition is associated with a cohort owner tag (COT), individually labeled COT1, COT2, ... COTP for "P" owners, a cohort authentication tag (or "CAT," individually labeled CAT1, CAT2, ... CATN), and a corresponding cohort hash (individually labeled CDH1, CDH2, ... CDHN). Although not shown in the CD file 128, each cohort definition also includes a cohort identifier CID which may be used as an index in the CD file 128 to access a corresponding cohort definition. Each COT is a data structure containing a unique owner ID (OID) and a randomly determined value referred to as an owner key. The COT is provided encrypted and authenticated, and the owner key may be securely stored within the security engine 120 and not exposed to any other processing entity outside the security engine 120. In one embodiment, the owner key is at least 128 bits for enhanced security. It is noted that a first owner identified as OID1, generates cohort definitions CD1 and CD2 and thus uses the same COT1 for that owner.

As described herein, the COT from each owner is predetermined for each owner and then pre-provisioned into the security engine 120 and associated with the corresponding owner key (not shown in the security engine 120). Each owner generates one or more cohort definitions (CDs) in which each CD includes a CID, an OID, a resource allocation identifying the resources used by the CD, and a set of boot or startup images to be installed on the SoC 100. The owner then separately generates a corresponding CAT for each CD that is used to authenticate the CD. Each CAT is calculated over the corresponding COT, the CD, and the entire PaCo 124 previously provided to each owner. Then each CD is presented along with its corresponding CAT to be installed onto the SoC 100 through the security engine 120. As shown, for example, N CDs CD1, CD2, ..., CDN along with their corresponding N CATs CAT1, CAT2, ..., CATN are provided to and stored within the security engine 120. As described further herein, the security engine 120 separately calculates, for each CD, the corresponding CAT, compares the calculated CAT with the provided CAT, and installs the CD when there is a match along with the corresponding COT and CAT. The security engine 120 further calculates and stores the corresponding cohort hash for each installed CD.

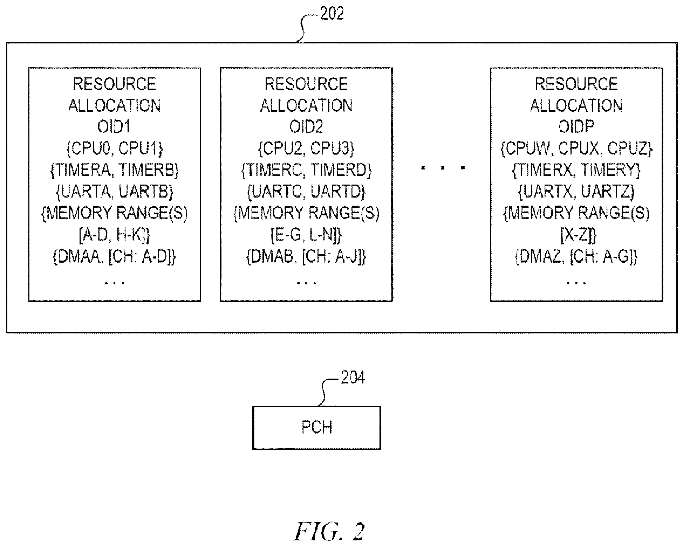

FIG. 2 is a simplified block diagram of a partitioning contract (PaCo) 202 configured according to one embodiment. The resources of the SoC 100, shown in FIG. 1 as masters 102 and slave devices 104 (e.g., one or more peripheral(s) 108, memory 110, interface devices 112, etc.), which may include CPUs, timers, universal asynchronous receiver-transmitters (UARTs), one or more memory ranges, DMA controllers and corresponding DMA channels, etc., are subdivided and allocated to each of P owners represented as OID1, OID2, ..., OIDP. As shown, for example, OID1 is allocated CPU0 and CPU1, TimerA and TimerB, UARTA and UARTB, memory ranges [A-D, H-K], channels A-D of DMA controller DMAA, etc. A similar list is provided for each of the remaining owners OID2 - OIDP, in which the resources do not overlap between any of the owners. This means that any resource allocated to one owner is not allocated to any of the other owners. The resources and memory or channel values listed in FIG. 2 are arbitrarily shown and may vary from one configuration to another. In one embodiment, each of the owners identify the resources that they need to perform the functions needed to be executed, and the SoC 100 is configured to include the combined resources needed for all of the owners.

Once the PaCo 202 is determined, it is converted to a hash shown as PCH 204 according to any suitable hashing algorithm. In one embodiment, the secure hashing algorithm 3 (SHA-3 512) may be used which generates a 512-bit hash value, although other types of hashing algorithms may be used. An identical copy of the PaCo 202 is stored as the PaCo 124 and an identical copy of the PCH 204 is securely provisioned as the PCH 126 of the security engine 120 previously described. The PaCo 202 and the PCH 204 may be distributed to each of the owners (identified as OID1 - OIDP) of the SoC 100.

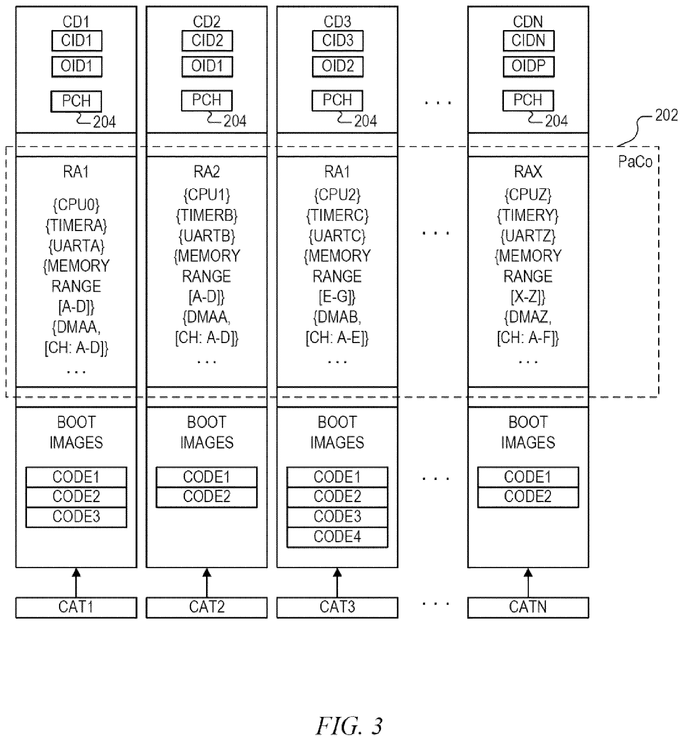

FIG. 3 is a simplified block diagram of the cohort definitions CD1 - CDN according to one embodiment. Each of the cohort definitions CD1 - CDN includes a cohort identifier (CID), shown as CID1 - CIDN, an owner ID (OID), shown as a corresponding one of the P owners OID1 - OIDP, a copy of the PaCo hash PCH 204, a resource allocation (RA) list, a set of boot code images (CODE1, CODE2, ...) to be installed onto the SoC 100, and a corresponding cohort authentication tag CAT, shown as CAT1, CAT2, CAT3, ... CATN). Each owner may provide one or more cohort definitions. As shown, for example, owner OID1 provides the cohort definitions CD1 and CD2, owner OID2 at least provides the cohort definition CD3 (and possibly more), and owner OIDP at least provides the cohort definition CDN (and possibly more). The PCH 204 is used for validation upon each bootup of the system 100 as further described herein. The RA list provided within each cohort definition must not only be contained within the pre-agreed PaCo 202, but must also be contained within the resource allocation list authorized for that owner within the PaCo 202 as shown in FIG. 2. In other words, each owner is not authorized to list resources not allocated to it nor allocated to any other owner. The listed resources between two or more cohort definitions of the same owner may, however, overlap. As shown, for example, CD1 and CD2, which are owned by OID1, may list the same memory ranges, CPUs, timers, UARTs, one or more memory ranges, DMA controllers and corresponding DMA channels, etc. The resources and memory or channel values listed in FIG. 3 are arbitrarily shown and may vary from one configuration to another. The CAT listed for each of the cohort definitions is provided by the owner for validation and authentication by the security engine 120 for installing the corresponding boot images as further described herein.

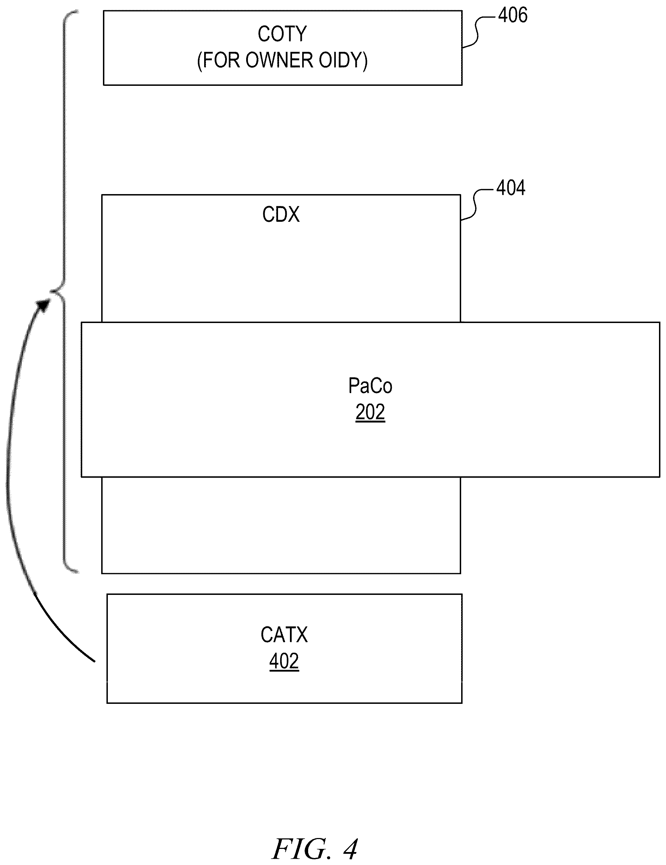

FIG. 4 is a simplified block diagram illustrating generation of a CAT, shown as CATX 402, used for authenticating a corresponding cohort definition CDX 404 of an owner OIDY according to one embodiment. The CATX 402 is calculated over the entire PaCo 202, the cohort definition CDX 404 generated by the owner OIDY, and the corresponding COT, shown as COTY 406 for that owner OIDY. The PaCo 202 is the partitioning contract file provided to each of the P owners. Each owner generates a CAT for each cohort definition to be provided by that owner. For example, owner OID1 calculates CAT1 over the entire PaCo 202, CD1, and COT1. Recall that COT1 is a data structure containing the unique value OID1 (for the owner identified by OID1) and a randomly determined owner key for OID1. Owner OID1 also calculates CAT2 over the entire PaCo 202, CD2, and COT1. It is noted that the same COT, or COT1, is used by owner OID1 for each CAT generated for each CD by that owner. It is noted that each CAT can be a cipher-based message authentication code (CMAC), an RSA (Rivest-Shamir-Adleman) encryption with error correction code (ECC) or RSA/ECC, or generated using other types of encryption methods.

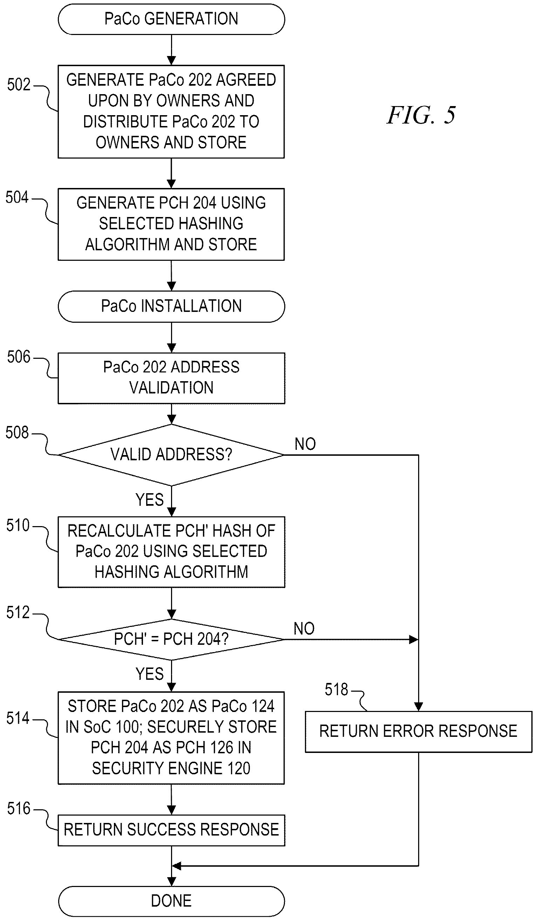

FIG. 5 is a flowchart diagram illustrating generation and installation of the PaCo 202 and PCH 204 into the SoC 100 according to one embodiment. At first block 502, the PaCo 202 is generated as agreed upon by the owners and a copy is distributed to the owners and locally stored. At next block 504, the hash PCH 204 for the PaCo 202 is calculated using a selected hashing algorithm (e.g., SHA-3 512) and locally stored. A period of time may elapse before installation. At next block 506, installation of the PaCo 202 and the PCH 204 is initiated, in which address validation may be performed to verify the address where the PaCo 202 (and possibly also the PCH 204) is stored. This may simply be a sanity check to validate the location of the PaCo 202. At next block 508, if the stored address of the PaCo 202 is valid, operation advances to block 510 in which a hash PCH' of the PaCo 202 is recalculated using a selected hashing algorithm (e.g., SHA-3 512). At next block 512, it is queried whether the recalculated hash PCH' equals the previously generated and stored PCH 204. If so, at next block 514, the PaCo 202 is stored as the PaCo 124 into the SoC 100, and the PCH 204 is securely stored in the security engine 120 as the PCH 126. At next block 516, a success response is retumed and operation is completed.

If the PaCo 202 address is not valid as determined at block 508, or if the recalculated hash PCH' is not equal to the previously calculated hash PCH 204 as determined at block 512, then operation proceeds instead to block 518 in which an error response is returned. This informs authorized personnel to determine the appropriate course of action based on the particular errors for making corrections, and operation is completed. Corrections may be made and the process repeated until a success response is received.

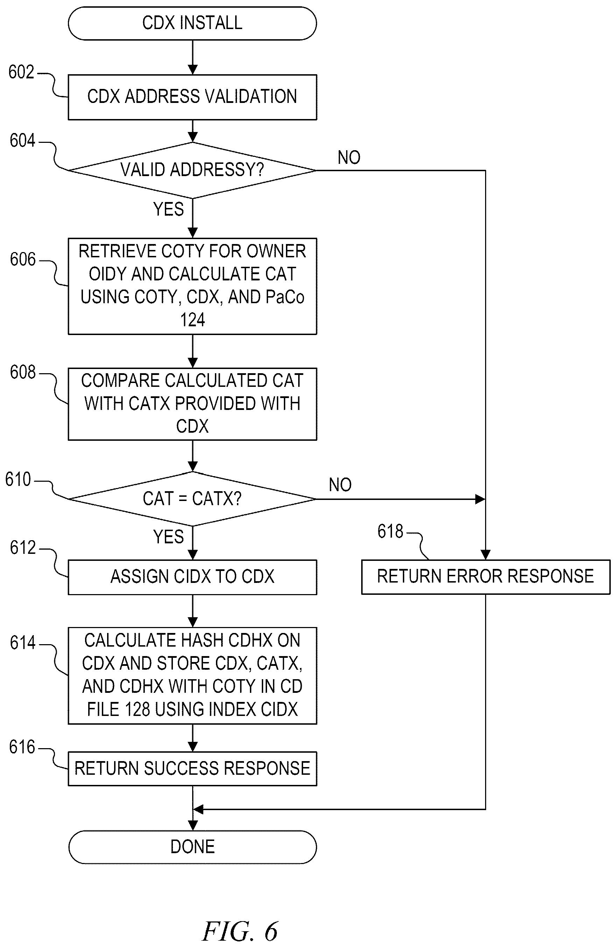

FIG. 6 is a flowchart diagram illustrating installation of a cohort definition CDX into the SoC 100 according to one embodiment. This procedure may be repeated for each cohort definition to be installed (for X ranging from 1 to N) for each owner identified as OIDY (for Y ranging from 1 to P). At first block 602, an address validation may be performed to verify the address where the CDX is checked for validity. This may simply be a sanity check to validate the location of the CDX. At next block 604, if the stored address of the CDX is valid, then operation advances to block 606 in which the COTY for the owner OIDY is retrieved (e.g., from the CD file 128), and a corresponding cohort authentication tag (CAT) is calculated using COTY, CDX, and the PaCo 124. Then at next block 608, the calculated CAT is compared with the CATX provided with CDX (e.g., as shown provided to the security engine 120 in FIG. 1). At next block 610 it is queried whether the currently calculated CAT is equal to the CATX provided with the CDX. If so, at next block 612 a cohort identifier (CID) is assigned to the CDX (if not already assigned). At next block 614, a corresponding hash value CDHX is calculated on CDX using a suitable hashing algorithm (e.g., SHA-3 512), and the CDX, CATX, and CDHX are stored along with COTY in the CD file 128 using CIDX as an index. At next block 616, a success response is retumed and operation is completed.

If the address where the CDX is stored is not valid as determined at block 604, or if CAT does not equal CATX as determined at block 608, then operation instead proceeds to block 618 in which an error response is retumed and operation is completed. The error response is loaded with the particular error being returned, such as address invalid or CATX invalid or the like. Corrections may be made and the process repeated until a success response is received.

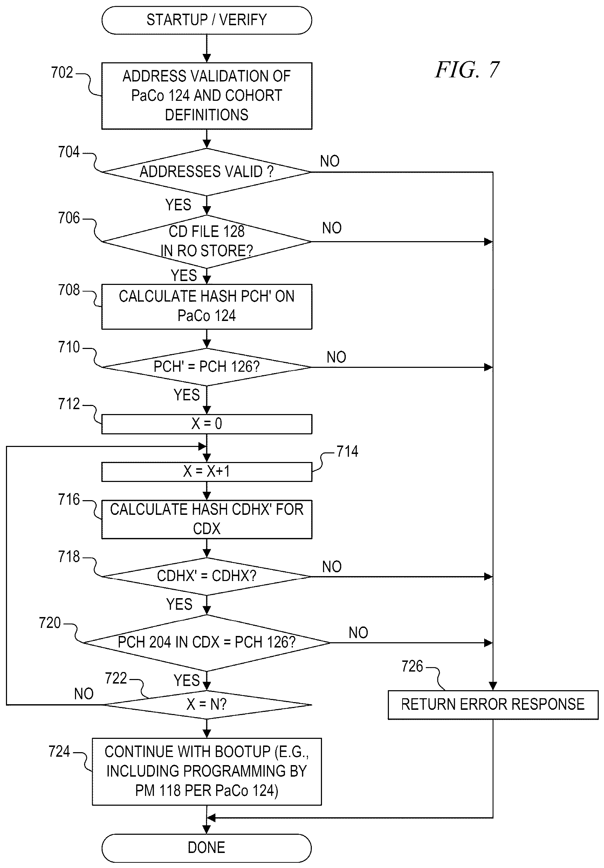

FIG. 7 is a flowchart diagram illustrating operation of the security engine 120 upon startup and verification of the SoC 100 according to one embodiment. At first block 702, an address validation may be performed to verify the address where the PaCo 124 and the addresses of each of the cohort definitions in the CD file 128 (or simply the address of the CD file 128 itself) are checked for validity. This may simply be a sanity check to validate the addresses of the PaCo 124 and the cohort definitions. At next block 704, it is queried whether the addresses checked at block 702 are valid. If so, operation advances to block 706 in which it is queried whether the CD file 128 is stored in read-only (RO) memory. After the cohort definitions are loaded into the CD file 128, it is marked as read-only memory to avoid tampering. If the CD file 128 is still marked as RO, then operation advances to block 708 in which a hash PCH' is newly calculated on the PaCo 128 using a suitable hashing algorithm, (e.g., SHA-3 512). Operation then advances to block 710 in which it is queried whether PCH' = PCH 126 previously provisioned in a secure manner within the security engine 120. If so, then operation advances to block 712 in which a parameter "X" is set equal to 0 (e.g., reset or cleared), and then to block 714 in which X is incremented from 0 to 1. It is noted that X is subsequently incremented for each iteration from 1 to N to validate the N cohort definitions stored in the CD file 128.

At next block 716, a hash CDHX' is calculated for CDX using a suitable hashing algorithm (e.g., SHA-3 512). In the first iteration, for example, a hash CDH1' is calculated for the first cohort definition CD1. At next block 718, it is queried whether CDHX' = CDHX previously stored in the CD file 128. In the first iteration, for example, it is queried whether the newly calculated has CDH1' for CD1 = CDH1 stored in the CD file 128. If so, operation advances to block 720 in which it is queried whether the PCH 204 stored in CDX = PCH 126 stored in the security engine 120. In the first iteration, for example, it is queried whether the PCH 204 stored in CD1 (e.g., as shown in FIG. 3) is equal to PCH 126 previously stored in a secure manner within the security engine 120. If so, operation advances to block 722 in which it is queried whether X = N, meaning whether X has been incremented to N for each of the cohort definitions of the CD file 128. If not, operation returns to block 714 in which X is incremented to validate the next cohort definition. The blocks 714 to 722 are repeated for each of the N cohort definitions stored in the CD file 128. When X = N as determined at block 722 in which each of the N cohort definitions have been verified, then operation advances to block 724 in which bootup of the SoC 100 is continued. This may include programming by the PM 118 of each of the AIDA devices 114 and each of the IDAC devices 116 via an extended domain resource controller (XDRC) 122 according to a locally stored partitioning contract (PaCo) 124. Operation is then completed and normal operation of the SoC 100 may be commenced.

If any of the addresses are not valid as determined at block 704, or if the CD file 128 is not stored in RO memory as determined at block 706, or if the newly calculated hash PCH' is not equal to the stored PCH 126 as determined at block 710, or if the newly calculated hash CDHX' for any cohort definition is not equal to the hash CDX stored in the CD file 128 for that cohort definition as determined at block 718, or if the PCH 204 stored in any cohort definition is not equal to the stored PCH 126 stored in the security engine 120 as determined at block 720, then operation instead proceeds to block 726 in which an error response is retumed and operation is completed. It is noted that the process running the verification process may have backup measures, such as backup cohort definitions stored within a secure backup memory, such that some error conditions may be resolved. Otherwise, an error message may be provided when appropriate. Corrections or repairs may be made and the process repeated until a successful bootup is achieved.

A system and method for protecting access to resources of an SoC among multiple owners. The SoC includes multiple master devices, each configured to conduct transactions with addressed ones of multiple slave devices via an interconnect, multiple access devices coupled to the interconnect and programmed to control access to each slave device, a secure memory that stores a hash value of a partitioning contract incorporating a list of resources available to each of the owners, and a security engine. The security engine is configured to allow installation and execution of code provided by each of the owners only when the code is authenticated by the stored partitioning contract hash value. The security engine is also configured to program the access devices according to the partitioning contract. An encrypted cohort owner tag may be stored for each owner and used to generate cohort authentication tags used to authenticate cohort definitions.

Aspects of the disclosure are defined in the accompanying claims. In a first aspect there is provided a System-on-Chip (SoC), comprising: a plurality of master devices, each configured to conduct transactions with addressed ones of a plurality of slave devices via an interconnect; a plurality of access devices coupled to the interconnect that are each programmed to control access to each slave device; a secure memory that stores a hash value of a partitioning contract incorporating a list of resources available to each of a plurality of owners; and a security engine configured to allow installation and execution of code provided by each of the plurality of owners only when the code is authenticated by the stored partitioning contract hash value and configured to program the plurality of access devices according to the partitioning contract. In some embodiments, the hash value of the partitioning contract is generated and stored in the secure memory as the stored partitioning contract hash value and used to authenticate code for installation and execution.In some embodiments, each of the plurality of owners is associated with an encrypted cohort owner tag comprising a unique owner identifier and a randomly determined owner key that is securely stored by the security engine.

In some embodiments, at least one cohort definition comprising a list of resources, at least one boot image, and a cohort identifier is received from each of the plurality of owners for installation along with at least one owner cohort authentication tag for authenticating a corresponding one of the at least one cohort definition, and wherein each owner cohort authentication tag is calculated over a provided cohort owner tag, the corresponding cohort definition, and the partitioning contract.

In some embodiments, the security engine, for each of the at least one cohort definition, is configured to calculate a cohort authentication tag using a stored cohort owner tag for the owner, the provided cohort definition, and a locally stored copy of the partitioning contract, and to compare the calculated cohort authentication tag with the provided owner cohort authentication tag for authenticating the provided cohort definition for installation.In some embodiments, the security engine is configured to calculate a cohort hash value for an authenticated cohort definition and to install the authenticated cohort definition and the calculated cohort hash value.

In some embodiments, the security engine is configured to recalculate a cohort hash value on the authenticated cohort definition and to compare the recalculated cohort hash value with a stored cohort hash value upon bootup.In some embodiments, the security engine is configured to recalculate a hash of a locally stored copy of the partitioning contract and to compare the recalculated hash with the stored partitioning contract hash value upon bootup.

In some embodiments, the security engine is configured to recalculate a cohort hash on each of a plurality of stored cohort definitions and to compare each recalculated cohort hash with a corresponding one of a plurality of stored cohort hash values upon bootup. In some embodiments, the security engine is configured to retrieve a partitioning contract hash from each of a plurality of stored cohort definitions and to compare each retrieved partitioning contract hash with the stored partitioning contract hash value upon bootup.

In a second aspect, there is provided a method of sharing resources on a System-on-Chip (SoC) in a secure manner, comprising: configuring each of a plurality of master devices of the SoC to conduct transactions with addressed ones of a plurality of slave devices via an interconnect of the SoC; programming a plurality of access devices coupled to the interconnect to control access to each of the plurality of slave devices; storing a hash value of a partitioning contract incorporating a list of resources available to each of a plurality of owners within a secure memory of the SoC; allowing installation and execution of code provided by each of the plurality of owners only when the code is authenticated by the stored partitioning contract hash value; and programming the plurality of access devices according to the partitioning contract.

In some embodiments, the method further comprises: generating and storing the hash value of the partitioning contract in the secure memory as the stored partitioning contract hash value; and using the stored partitioning contract hash value to authenticate code for installation and execution. In some embodiments, the method further comprises encrypting and securely storing a plurality of cohort owner tags each comprising a unique owner identifier and a randomly determined owner key associated with a corresponding one of the plurality of owners.

In some embodiments, the method further comprises receiving at least one cohort definition comprising a list of resources, at least one boot image, and a cohort identifier for installation; and receiving an owner cohort authentication tag for each cohort definition to be installed, wherein each owner cohort authentication tag is calculated over a corresponding cohort owner tag, a corresponding cohort definition, and the partitioning contract for authenticating the corresponding cohort definition.

In some embodiments, the method further comprises calculating, for each of the at least one cohort definition, a cohort authentication tag using a stored cohort owner tag for the owner, the provided cohort definition, and a locally stored copy of the partitioning contract; and comparing the calculated cohort authentication tag with the provided owner cohort authentication tag for authenticating the provided cohort definition for installation.

In some embodiments, the method further comprises calculating a cohort hash value for an authenticated cohort definition; and installing the authenticated cohort definition and the calculated cohort hash value. In some embodiments, the method further comprises recalculating a cohort hash value on the authenticated cohort definition upon bootup; and comparing the recalculated cohort hash value with a stored cohort hash value. In some embodiments, the method further comprises upon bootup, recalculating a hash of a locally stored copy of the partitioning contract; and comparing the recalculated hash with the stored partitioning contract hash value. In some embodiments, the method further comprises upon bootup, recalculating a cohort hash on each of a plurality of stored cohort definitions; and comparing each recalculated cohort hash with a corresponding one of a plurality of stored cohort hash values. In some embodiments, the method further comprises upon bootup, retrieving a partitioning contract hash from each of a plurality of stored cohort definitions; and comparing each retrieved partitioning contract hash with the stored partitioning contract hash value.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A System-on-Chip (SoC), comprising:
a plurality of master devices, each configured to conduct transactions with addressed ones of a plurality of slave devices via an interconnect;
a plurality of access devices coupled to the interconnect that are each programmed to control access to each slave device;
a secure memory that stores a hash value of a partitioning contract incorporating a list of resources available to each of a plurality of owners; and
a security engine configured to allow installation and execution of code provided by each of the plurality of owners only when the code is authenticated by the stored partitioning contract hash value and configured to program the plurality of access devices according to the partitioning contract.

2. The SoC of claim 1, wherein the hash value of the partitioning contract is generated and stored in the secure memory as the stored partitioning contract hash value and used to authenticate code for installation and execution.

3. The SoC of claim 1 or 2, wherein each of the plurality of owners is associated with an encrypted cohort owner tag comprising a unique owner identifier and a randomly determined owner key that is securely stored by the security engine.

4. The SoC of claim 3, wherein at least one cohort definition comprising a list of resources, at least one boot image, and a cohort identifier is received from each of the plurality of owners for installation along with at least one owner cohort authentication tag for authenticating a corresponding one of the at least one cohort definition, and wherein each owner cohort authentication tag is calculated over a provided cohort owner tag, the corresponding cohort definition, and the partitioning contract.

5. The SoC of claim 4, wherein the security engine, for each of the at least one cohort definition, is configured to calculate a cohort authentication tag using a stored cohort owner tag for the owner, the provided cohort definition, and a locally stored copy of the partitioning contract, and to compare the calculated cohort authentication tag with the provided owner cohort authentication tag for authenticating the provided cohort definition for installation.

6. The SoC of any preceding claim, wherein the security engine is configured to calculate a cohort hash value for an authenticated cohort definition and to install the authenticated cohort definition and the calculated cohort hash value.

7. The SoC of claim 6, wherein the security engine is configured to recalculate a cohort hash value on the authenticated cohort definition and to compare the recalculated cohort hash value with a stored cohort hash value upon bootup.

8. The SoC of any preceding claim, wherein the security engine is configured to recalculate a hash of a locally stored copy of the partitioning contract and to compare the recalculated hash with the stored partitioning contract hash value upon bootup.

9. The SoC of any preceding claim, wherein the security engine is configured to recalculate a cohort hash on each of a plurality of stored cohort definitions and to compare each recalculated cohort hash with a corresponding one of a plurality of stored cohort hash values upon bootup.

10. The SoC of any preceding claim, wherein the security engine is configured to retrieve a partitioning contract hash from each of a plurality of stored cohort definitions and to compare each retrieved partitioning contract hash with the stored partitioning contract hash value upon bootup.

11. A method of sharing resources on a System-on-Chip (SoC) in a secure manner, comprising:
configuring each of a plurality of master devices of the SoC to conduct transactions with addressed ones of a plurality of slave devices via an interconnect of the SoC;
programming a plurality of access devices coupled to the interconnect to control access to each of the plurality of slave devices;
storing a hash value of a partitioning contract incorporating a list of resources available to each of a plurality of owners within a secure memory of the SoC;
allowing installation and execution of code provided by each of the plurality of owners only when the code is authenticated by the stored partitioning contract hash value; and
programming the plurality of access devices according to the partitioning contract.

12. The method of claim 11, further comprising:
generating and storing the hash value of the partitioning contract in the secure memory as the stored partitioning contract hash value; and
using the stored partitioning contract hash value to authenticate code for installation and execution.

13. The method of claim 11 or 12, encrypting and securely storing a plurality of cohort owner tags each comprising a unique owner identifier and a randomly determined owner key associated with a corresponding one of the plurality of owners.

14. The method of claim 13, further comprising:
receiving at least one cohort definition comprising a list of resources, at least one boot image, and a cohort identifier for installation; and
receiving an owner cohort authentication tag for each cohort definition to be installed, wherein each owner cohort authentication tag is calculated over a corresponding cohort owner tag, a corresponding cohort definition, and the partitioning contract for authenticating the corresponding cohort definition.

15. The method of claim 14, further comprising:
calculating, for each of the at least one cohort definition, a cohort authentication tag using a stored cohort owner tag for the owner, the provided cohort definition, and a locally stored copy of the partitioning contract; and
comparing the calculated cohort authentication tag with the provided owner cohort authentication tag for authenticating the provided cohort definition for installation.
